# EUROPÄISCHE PATENTANMELDUNG

(11) **EP 1 473 137 A1**
(43) Veröffentlichungstag der Anmeldung: **03.11.2004**
(21) Anmeldenummer: 03009648.1
(22) Anmeldetag: 30.04.2003
(51) Int. Cl.: B29C 47/50, B29C 47/40, B29B 7/48

(54) **Verfahren zum Aufschmelzen und Homogenisieren von multimodalen und bimodalen Polyolefinen**

(71) Anmelder: Coperion Werner & Pfleiderer GmbH & Co. KG, 70469 Stuttgart (DE)
(72) Erfinder: Burkhardt, Ulrich, 70372 Stuttgart (DE)
(74) Vertreter: Rau, Manfred, Dr. Dipl.-Ing.

(57) **Zusammenfassung**

Bei einem Verfahren zum Aufschmelzen und Homogenisieren von multimodalen der bimodalen Polyolefinen wird ein mehrwellig ausgebildeter erster Extruder (1) und ein diesem in Förderrichtung (17) nachgeordneter zweiter Extruder (2) eingesetzt. Der zweite Extruder (2) ist ebenfalls mehrwellig ausgebildet. Der Außendurchmesser der Schnecken-Wellen (14, 15) des ersten Extruders (1) ist kleiner als der Außendurchmesser der zweiten Schnecken-Wellen (29, 30) des zweiten Extruders (2). Der erste Extruder (1) wird mit einer höheren Drehzahl angetrieben als der zweite Extruder (2). Die Schergeschwindigkeit ist im ersten Extruder (1) höher als im zweiten Extruder (2).

## Beschreibung

Die Erfindung betrifft ein Verfahren nach dem Oberbegriff des Anspruches 1.

Bimodales oder multimodales Polyolefin-Pulver besitzt die Eigenschaft, dass einzelne Pulverkömer von Pulverkorn zu Pulverkorn stark unterschiedliche Molekulargewichtsverteilungen aufweisen und damit auch sehr unterschiedliche Schmelzeviskositäten und Elastizitätseigenschaften besitzen. Große Pulverpartikel können außerdem aus Agglomeraten kleinerer Pulverkörner bestehen. Allgemein gilt, dass diese Mikroinhomogenitäten bei der Aufbereitung zu einem homogenen Polyolefin als Endprodukt sehr problematisch sind.

Bei der Aufbereitung des erwähnten Pulvergemisches werden zwar die einzelnen Pulverkörner aufgeschmolzen; jedoch verbleiben die hochmolekularen und damit hochviskosen und hochelastischen Partikel in der niederviskoseren Schmelzematrix und können in Scherfeldern nur unzureichend, teilweise auch gar nicht, deformiert oder zerteilt werden, sodass in der Mikrostruktur eine inhomogene Matrix vorliegt. Wenn Granulat aus einem derart schlecht aufbereiteten, schwarz eingefärbten, zur Rohrherstellung vorgesehenen Polyolefin als Endprodukt geschnitten wird, erscheinen diese Partikel als Inhomogenität, und zwar auch als optische Inhomogenität in Form kleiner weißer Flecken. Die diesbezüglichen Probleme ergeben sich aus dem Artikel von Peter Heidemeyer und Joerg Pfeiffer in "Macromol. Symp. 181, 167 - 176 (2002)".

Aus der WO 98/15591 ist ein Verfahren der gattungsgemäßen Art bekannt, bei dem das Plastifizieren in einem ersten zweiwelligen Extruder und das Homogenisieren in einem zweiten nachgeordneten Extruder erfolgt. Der erste Extruder arbeitet mit niedriger Schergeschwindigkeit, während der zweite Extruder mit hoher Schergeschwindigkeit arbeitet. Mit diesem Verfahren können die eingangs geschilderten allgemeinen Probleme nicht zufriedenstellend gelöst werden.

Aus der DE 43 01 431 C2, der US-PS 3,261,056 und der DE-OS 23 04 088 (entspr. US-PS 3,860,220) ist es bekannt, zwei hintereinander geschaltete einwellige Extruder zum Aufschmelzen und Homogenisieren von Kunststoffen einzusetzen, wobei der erste Extruder eine Schnecken-Welle kleineren Durchmessers und höherer Drehzahl aufweist und der zweite Extruder eine Schneckenwelle größeren Durchmessers und niedrigerer Drehzahl. Derartige Aufbereitungs-Anlagen haben sich zur Aufbereitung der eingangs genannten Polyolefine als nicht geeignet erwiesen.

Aus der EP 1 005 411 B 1 ist weiterhin ein Verfahren zur Herstellung von Amino- und/oder Phenoplasten bekannt, bei dem die Vorkondensat-Lösung in einem ersten Extruder hergestellt wird, die zusammen mit Additiven und Füllstoffen einem zweiten Extruder zugeführt wird. Hierbei werden jeweils Doppelschneckenextruder mit gleichsinnig antreibbaren Schnecken eingesetzt. Der erste Extruder wird mit einer sehr niedrigen Drehzahl von 12 bis 20 min⁻¹ und der zweite Extruder mit einer höheren Drehzahl von 20 bis 300 min⁻¹, vorzugsweise einer Drehzahl von 80 bis 150 min⁻¹, angetrieben. Eine solche Extruder-Kaskade ist zur Lösung der eingangs geschilderten Probleme beim gattungsgemäßen Verfahren nicht einsetzbar.

Der Erfindung liegt daher die Aufgabe zu Grunde, eine Aufbereitung der Polyolefine beim gattungsgemäßen Verfahren so durchzuführen, dass eine völlig homogene Schmelzematrix entsteht.

Diese Aufgabe wird erfindungsgemäß durch die Merkmale im Kennzeichnungsteil des Anspruches 1 gelöst. Der Kern der Erfindung liegt darin, dass in dem eine erste Stufe bildenden ersten Extruder unter Einbringung der Energie, die etwas mehr als der Aufschmelzenthalpie entspricht, das Aufschmelzen des multimodalen oder bimodalen Polyolefins erfolgt. Dieses Aufschmelzen erfolgt mit hohen Schergeschwindigkeiten, wodurch gewährleistet wird, dass die Energieeinbringung tatsächlich an jeder erforderlichen Stelle erfolgt. Noch vorhandene lokale Unterschiede der Energieeinleitung werden durch den Wärmefluss von der bereits gebildeten Polyolefin-Schmelze auf noch nicht aufgeschmolzenes Polyolefin soweit ausgeglichen, dass am Austrag des die erste Stufe bildenden ersten Extruders ein grob aufgeschmolzenes Polyolefin vorliegt. Die hohen Schergeschwindigkeiten werden bei ansonsten konstanter Geometrie des Extruders durch eine hohe Drehzahl erzeugt. In dem eine zweite Stufe bildenden zweiten Extruder erfolgt dann bei deutlich niedrigeren Schergeschwindigkeiten das Homogenisieren des Polyolefins. Die niedrigeren Schergeschwindigkeiten werden durch eine entsprechend niedrige Drehzahl erzeugt. Durch die niedrige Schwergeschwindigkeit werden lokal hohe Energieeinbringungen vermieden. Daraus folgt, dass auch die Schmelzetemperaturen niedrig sind und damit wiederum die zur Deformation und Zerteilung notwendigen Scherkräfte an den die Inhomogenitäten bildenden Mikrostrukturen angreifen können. Es hat sich nämlich gezeigt, dass bei diesen Verfahren die Matrix, in der die hochmolekularen Partikel eingebettet sind, auf Grund der niedrigeren Schmelzetemperatur eine höhere Viskosität besitzt, als dies bei hohen Schergeschwindigkeiten der Fall wäre. Der Vollständigkeit halber sei darauf hingewiesen, dass die Schergeschwindigkeit definiert ist als die Geschwindigkeit, mit der ein Volumenelement geschert wird, also das Verhältnis der Geschwindigkeitsdifferenz zweier vorbeiströmender Schichten zu deren Abstand senkrecht zur Strömungsrichtung. In grober erster Näherung kann die mittlere Schergeschwindigkeit in einer Schnecke beschrieben werden durch den Quotienten aus Umfangsgeschwindigkeit der Schnecke und mittlerer Gangtiefe. Durch den Einsatz von mehrwelligen und insbesondere zweiwelligen Extrudern wird eine hohe Förderstabilität und damit ein sehr gleichmäßiger Prozessverlauf erreicht. Diese überraschenden Vorteile haben sich insbesondere beim Einsatz von pulverförmigen multimodalen oder bimodalen Polyolefinen aber auch von Granulat hieraus und von Gemischen aus Granulat und Pulver gezeigt.

Die Unteransprüche geben vorteilhafte und zum Teil erfinderische Weiterbildungen der erfindungsgemäßen Lehre wieder.

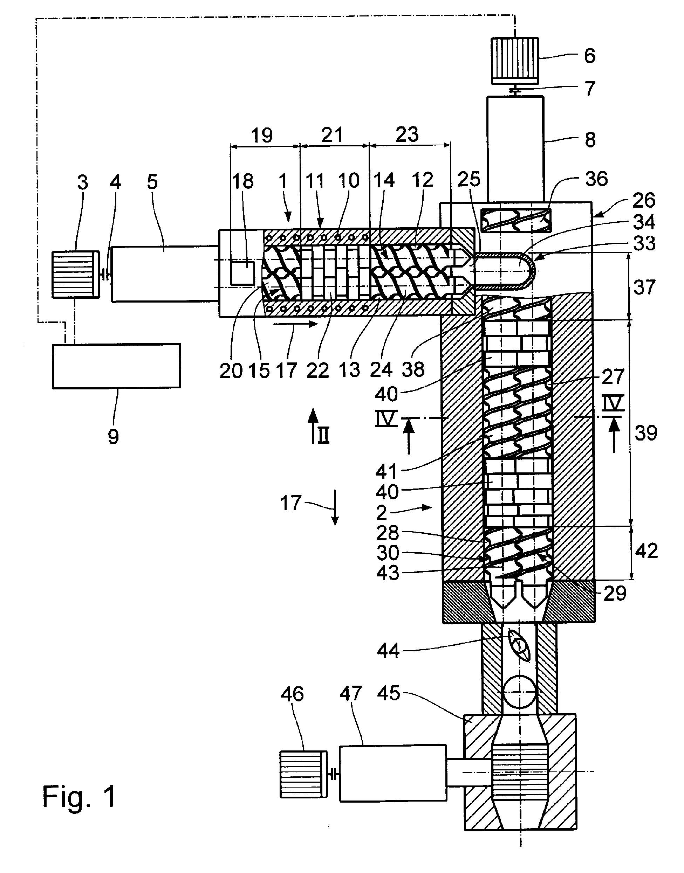

Weitere Merkmale, Vorteile und Einzelheiten der Erfindung ergeben sich aus der nachfolgenden Beschreibung eines Ausführungsbeispieles anhand der Zeichnung. Es zeigt
- Fig. 1: eine Draufsicht auf eine zur Durchführung des erfindungsgemäßen Verfahrens dienende Aufbereitungs-Anlage mit aufgebrochen dargestellten Extrudern,

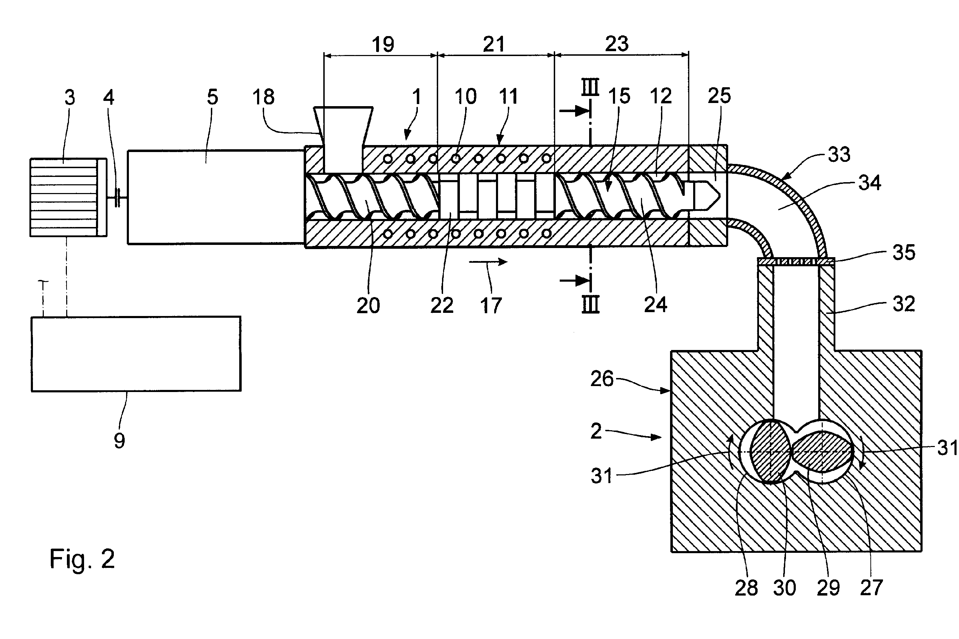

- Fig. 2: eine Seitenansicht der Anlage gemäß dem Sichtpfeil II in Fig. 1 mit aufgebrochen dargestellten Extrudern,

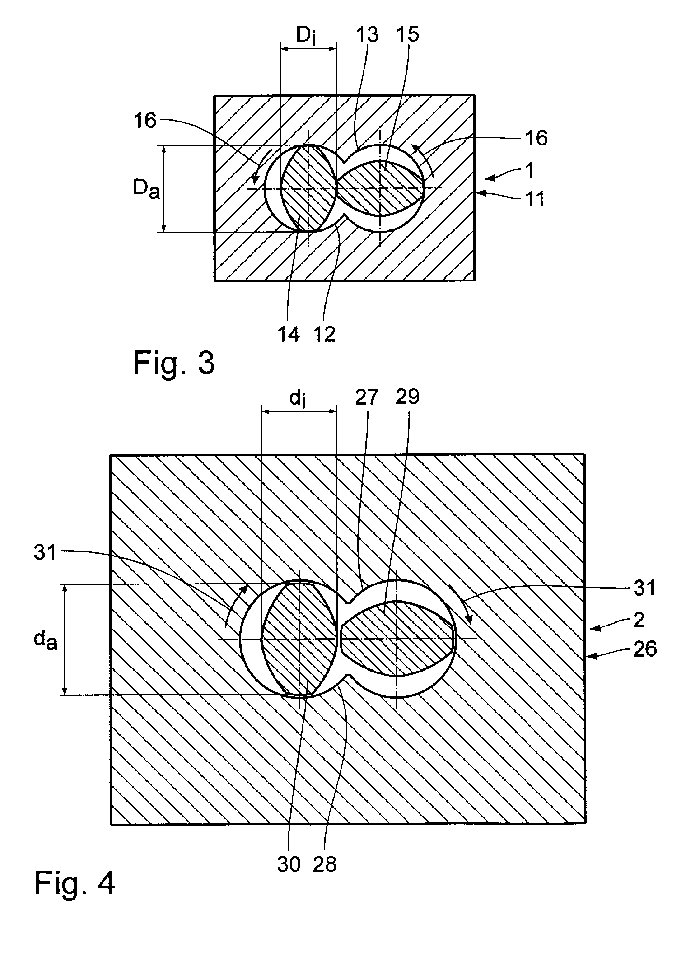

- Fig. 3: einen Querschnitt durch den ersten Extruder gemäß der Schnittlinie III-III in Fig. 2 und
- Fig. 4: einen Vertikalschnitt durch den zweiten Extruder gemäß der Schnittlinie IV-IV in Fig. 1.

Die in der Zeichnung dargestellte Aufbereitungs-Anlage weist einen ersten Extruder 1 und einen zweiten Extruder 2 auf. Der erste Extruder 1 ist oberhalb des zweiten Extruders 2 angeordnet. Der erste Extruder 1 wird mittels eines ersten Motors 3 über eine erste Kupplung 4 und ein erstes Getriebe 5 angetrieben. Der zweite Extruder 2 wird mittels eines zweiten Motors 6 über eine zweite Kupplung 7 und ein zweites Getriebe 8 angetrieben. Die Steuerung der Motoren 3 und 6 erfolgt über eine Steuereinheit 9.

Der erste Extruder 1 weist ein mit einer Heizung 10 versehenes Gehäuse 11 auf, in dem zwei erste Gehäuse-Bohrungen 12, 13 ausgebildet sind, die parallel zueinander verlaufen und etwa 8-förmig ineinander greifen. In diesen Gehäuse-Bohrungen 12, 13 sind zwei erste Schnecken-Wellen 14, 15 angeordnet, die an das erste Getriebe 5 angekuppelt sind. Die Schnecken-Wellen 14, 15 werden gleichsinnig, also in gleicher Drehrichtung 16, angetrieben. Sie sind als sogenannte dichtkämmende Schnecken-Wellen 14, 15 ausgebildet, die also selbstreinigend sind. Der erste Extruder 1 weist einen in einer Förderrichtung 17 hinter dem ersten Getriebe 5 angeordneten Zuführ-Trichter 18 auf, an den sich eine Einzugs-Zone 19 anschließt, in der die Schnecken-Wellen 14, 15 Schnecken-Elemente 20 aufweisen. An die Einzugs-Zone 19 schließt sich eine Aufschmelz-Zone 21 an, in der die Schnecken-Wellen 14, 15 mit Plastifizierelementen, beispielsweise Knet-Elementen 22, besetzt sind. Hieran schließt sich eine Förder-Zone 23 an, in der die Wellen 14, 15 wiederum mit Schnecken-Elementen 24 besetzt sind.

Die Elemente 20, 22, 24 weisen einen ersten Kern-Durchmesser Dᵢ und einen ersten Außendurchmesser Dₐ auf. An die Förder-Zone schließt sich eine Austrags-Zone 25 an. Anstelle von zwei Gehäuse-Bohrungen und entsprechend zwei Schnecken-Wellen können auch drei und mehr Bohrungen und eine entsprechende Zahl von Schnecken-Wellen vorhanden sein. Es können auch abschnittsweise Elemente vorhanden sein, die nicht selbstreinigend sind.

Der zweite Extruder 2 weist ebenfalls ein Gehäuse 26 auf, in dem zwei zweite Gehäuse-Bohrungen 27, 28 parallel zueinander und einander durchdringend ausgebildet sind, die also ebenfalls einen 8-förmigen Querschnitt begrenzen. In den zweiten Gehäuse-Bohrungen 27, 28 sind zwei mit dem zweiten Getriebe 8 gekuppelte zweite Schnecken-Wellen 29, 30 angeordnet, die ebenfalls gleichsinnig, d. h. in gleicher Drehrichtung 31, drehantreibbar sind. Auch die zweiten Schnecken-Wellen 29, 30 sind als sogenannte dichtkämmende, also selbstreinigende, Schnecken-Wellen 29, 30 ausgebildet. Der zweite Extruder 2 weist anschließend an das zweite Getriebe 8 einen Zuführ-Stutzen 32 auf, der mittels eines eine Übergabe-Zone 33 bildenden Rohr-Krümmers 34 mit der Austrags-Zone 25 des ersten Extruders 1 verbunden ist. In der Übergabe-Zone 33 ist als Rückhalte-Einrichtung 35 eine Seiherplatte, ein Sieb oder dergleichen angeordnet. Eine Seiherplatte weist Lochweiten von 1 bis 4 mm auf. Ein Sieb würde deutlich kleinere Maschenweiten, von beispielsweise etwa 0,2 mm aufweisen. Auch für den zweiten Extruder 2 gilt, dass mehr als zwei Bohrungen und entsprechend mehr als zwei Schnecken-Wellen vorhanden sein können und dass abschnittsweise Elemente auf den Schnecken-Wellen angeordnet sein können, die nicht selbstreinigend sind. Des Weiteren könnte beim zweiten Extruder 2 der Antrieb der Schnecken-Wellen auch gegenläufig erfolgen, da hierbei ein höherer Druckaufbau erreicht wird als bei gleichsinnig angetriebenen Schnecken-Wellen.

Dem Zuführ-Stutzen 32 ist - in Richtung zum zweiten Getriebe 8 - eine als sogenannte Rückwärts-Entgasung ausgebildete Entgasungs-Zone 36 vorgeordnet. Jede andere geeignete Form der Entgasung an der als notwendig angesehenen Stelle kann selbstverständlich ebenfalls vorgesehen sein. An den Zuführ-Stutzen 32 schließt sich in Förderrichtung 17 eine Einzugs-Zone 37 an, in der die zweiten Schnecken-Wellen 29, 30 mit Schnecken-Elementen 38 besetzt sind. Daran schließt sich eine langgestreckte Homogenisier-Zone 39 an, in der abwechselnd Misch- und Knet-Elemente 40 und Schnecken-Elemente 41 auf den Schnecken-Wellen 29, 30 angeordnet sind. Hieran schließt sich wiederum eine Druckaufbau-Zone 42 an, in der die Schnecken-Wellen 29, 30 mit Schnecken-Elementen 43 versehen sind.

Stromab der Druckaufbau-Zone 42 kann eine einstellbare Drossel 44 angeordnet sein, mittels derer bei unveränderter Drehzahl der Schnecken-Wellen 29, 30 die Energieeinbringung verändert werden kann. Um besonders hohen Druck aufzubauen, ist eine Schmelze-Pumpe 45 vorgesehen, die als Zahnrad-Pumpe ausgebildet ist und von einem Pumpen-Motor 46 mit Getriebe 47 angetrieben wird.

Die Elemente 38, 40, 43 weisen einen zweiten Kerndurchmesser d, und einen zweiten Außendurchmesser dₐ auf.

Auf der geschilderten Aufbereitungs-Anlage werden multimodale Polyolefine und ganz besonders bimodale Polyolefine aufbereitet. Das Aufschmelzen erfolgt im ersten Extruder 1, dem die Kunststoffe durch den ZuführTrichter 18 zugeführt werden, und zwar in der Aufschmelz-Zone 21 unter Einbringung von mechanischer Energie und gegebenenfalls Heiz-Energie von außen über die Heizung 10. Der Aufschmelz-Prozess erfolgt mit hoher Schergeschwindigkeit und bei entsprechend hoher Drehzahl der ersten Schnecken-Wellen 14, 15. Deren Drehzahl liegt in einem Bereich von 200 bis 1200 min⁻¹, bevorzugt in einem Bereich von 300 bis 900 min⁻¹ und besonders bevorzugt in einem Bereich von 400 bis 600 min⁻¹.

Der aufgeschmolzene Kunststoff verlässt den ersten Extruder 1 in der Übergabe-Zone 33 und wird dem zweiten Extruder 2 nahezu drucklos, also mit niedrigem Druck, zugeführt. In dem zweiten Extruder 2 erfolgt dann eine Homogenisierung der aufgeschmolzenen Kunststoffe, die dann direkt ausgetragen oder mittels der Schmelze-Pumpe 45 einer Weiterverarbeitung zugeführt werden.

Die Homogenisierung im zweiten Extruder 2 erfolgt mit gegenüber dem ersten Extruder 1 deutlich geringerer Schergeschwindigkeit und dementsprechend mit niedrigerer Drehzahl der zweiten Schnecken-Wellen 29, 30. Diese Drehzahlen bewegen sich im Bereich von 50 bis 250 min⁻¹ und bevorzugt im Bereich von 60 bis 190 min⁻¹ und besonders bevorzugt im Bereich von 80 bis 150 min⁻¹. In jedem Fall ist die Drehzahl der zweiten Wellen 29, 30 geringer als die der ersten Wellen 14, 15. Hierbei ist es besonders zweckmäßig, wenn die Drehzahl der ersten Schnecken-Wellen 14, 15 während des Betriebes konstant ist und wenn hierbei die Drehzahl der zweiten Schnecken-Wellen 29, 30 regelbar ist.

Da der Durchsatz beider Extruder 1, 2 naturgemäß gleich sein soll, ist der Förderquerschnitt der zweiten Wellen 29, 30 größer als der der ersten Wellen 14, 15. Für das Verhältnis der Außendurchmesser Dₐ zu dₐ gilt: 0,3 ≤ Dₐ/dₐ ≤ 0,8 und bevorzugt 0,5 ≤ Dₐ/dₐ ≤ 0,8. Für das Durchmesserverhältnis Dₐ/Dᵢ der ersten Schneckenwellen 14, 15 gilt: 1,4 ≤ Dₐ/Dᵢ ≤ 2,1. Entsprechend gilt für das Durchmesserverhältnis dₐ/dᵢ der zweiten Schnecken-Wellen 29, 30: 1,4 ≤ dₐ/dᵢ≤ 2,1. Durch die geschilderten Abmaße und die geschilderte Betriebsweise wird erreicht, dass einerseits das Aufschmelzen im ersten Extruder 1 sehr schnell vor sich geht und dass andererseits das Homogenisieren im zweiten Extruder 2 über eine längere Zeit gestreckt wird. Da die eingesetzten Extruder 1, 2 zwei- oder mehrwellige Maschinen sind, ist ein stetiger förderstabiler Betrieb gewährleistet im Gegensatz zu einwelligen Extrudern, die zum sogenannten Pumpen neigen.

Die eingesetzten multimodalen oder bimodalen Polyolefine werden in Pulverform oder Granulat oder einem Gemenge aus Pulver und Granulat zugeführt. Wenn diese zugeführten Polyolefine zum Agglomerieren oder Sintern neigen, können sich in der Aufschmelz-Zone 21 größere Pulver- bzw. Granulat-Agglomerate bilden, die in der sie umgebenden Schmelze sich wie Festkörper verhalten und mit dieser aus dem ersten Extruder 1 ausgetragen werden. Sie werden an der als grobmaschiges Sieb oder Seiherplatte ausgebildeten Rückhalte-Einrichtung 35 aufgefangen und schmelzen dort ab, bis sich der Durchmesser dieser Partikel auf den Durchmesser der Löcher der Seiherplatte bzw. die Siebweite des Siebes reduziert hat. Derartige Partikel werden in der heißen sie umgebenden Schmelze durch Wärmeleitung verhältnismäßig schnell aufgeschmolzen, sodass sichergestellt ist, dass alle Partikel bis zum Eintritt in die Homogenisier-Zone 39 vollständig aufgeschmolzen sind.

## Patentansprüche

1. Verfahren zum Aufschmelzen und Homogenisieren von multimodalen oder bimodalen Polyolefinen auf einem ersten Extruder (1) und einem diesem in Förderrichtung (17) nachgeordneten zweiten Extruder (2),
wobei der erste Extruder (1) als mehrwelliger Extruder mit mehreren drehantreibbaren ersten Schnecken-Wellen (14, 15) ausgebildet ist, **dadurch gekennzeichnet,**
**dass** der zweite Extruder (2) als mehrwelliger Extruder mit mehreren drehantreibbaren zweiten Schnecken-Wellen (29, 30) ausgebildet ist, dass der Außendurchmesser (Dₐ) der ersten Schnecken-Wellen (14, 15) kleiner ist als der Außendurchmesser (dₐ) der zweiten Schnecken-Wellen (29, 30),
**dass** die ersten Schnecken-Wellen (14, 15) mit einer höheren Drehzahl angetrieben werden als die zweiten Schnecken-Wellen (29, 30) und
**dass** die Schergeschwindigkeit im ersten Extruder (1) höher ist als im zweiten Extruder (2).

2. Verfahren nach Anspruch 1, **dadurch gekennzeichnet,**
**dass** die Schergeschwindigkeit im ersten Extruder (1) mindestens doppelt, bevorzugt vier bis fünf mal, und besonders bevorzugt sechs bis zehn mal so hoch ist wie im zweiten Extruder (2).

3. Verfahren nach Anspruch 1 oder 2, **dadurch gekennzeichnet,**
**dass** die Drehzahl der zweiten Schnecken-Wellen (29, 30) regelbar ist.

4. Verfahren nach einem der Ansprüche 1 bis 3, **dadurch gekennzeichnet,**
**dass** die ersten Schnecken-Wellen (14, 15) mit einer Drehzahl von 200 bis 1200 min⁻¹, bevorzugt von 300 bis 900 min⁻¹ und besonders bevorzugt von 400 bis 600 min⁻¹ angetrieben werden.

5. Verfahren nach einem der Ansprüche 1 bis 4, **dadurch gekennzeichnet,**
**dass** die zweiten Schnecken-Wellen (29, 30) mit einer Drehzahl von 50 bis 250 min⁻¹ , bevorzugt von 60 bis 190 min⁻¹ und besonders bevorzugt von 70 bis 150 min⁻¹ angetrieben werden.

6. Verfahren nach einem der Ansprüche 1 bis 5, **dadurch gekennzeichnet,**
**dass** für das Verhältnis der Außendurchmesser (Dₐ) der ersten Schnecken-Wellen (14, 15) zum Außendurchmesser (dₐ) der zweiten Schnecken (29, 30) gilt: 0,3≤ Dₐ/dₐ≤ 0,8 und bevorzugt 0,5≤ Dₐ/dₐ≤ 0,8.

7. Verfahren nach einem der Ansprüche 1 bis 6, **dadurch gekennzeichnet,**
**dass** für das Verhältnis der Außendurchmesser (Dₐ) zum Innendurchmesser (D,) der ersten Schnecken-Wellen (14, 15) gilt: 1,4 ≤ Dₐ/Dᵢ≤ 2,1.

8. Verfahren nach einem der Ansprüche 1 bis 7, **dadurch gekennzeichnet,**
**dass** für der Verhältnis der Außendurchmesser (dₐ) zum Innendurchmesser (dᵢ) der zweiten Schnecken-Wellen (29, 30) gilt: 1,4≤ dₐ/dᵢ≤ 2,1.

9. Verfahren nach einem der Ansprüche 1 bis 8, **dadurch gekennzeichnet,**
**dass** die Drehzahl der ersten Schnecken-Wellen (14, 15) konstant ist.

10. Verfahren nach einem der Ansprüche 1 bis 9, **dadurch gekennzeichnet,**
**dass** zweiwellige Extruder als erster Extruder (1) und/oder zweiter Extruder (2) verwendet werden.

11. Verfahren nach einem der Ansprüche 1 bis 10, **dadurch gekennzeichnet,**
**dass** die Polyolefine dem ersten Extruder (1) in Pulverform zugeführt werden.

12. Verfahren nach einem der Ansprüche 1 bis 11, **dadurch gekennzeichnet,**
**dass** die ersten Schnecken-Wellen (14, 15) und/oder die zweiten Schnecken-Wellen (29, 30) gleichsinnig drehangetrieben werden.

13. Verfahren nach einem der Ansprüche 1 bis 12, **dadurch gekennzeichnet,**
**dass** als erste Schnecken-Wellen (14, 15) und/oder zweite Schnecken-Wellen (29, 30) dichtkämmende Schnecken-Wellen eingesetzt werden.

14. Verfahren nach einem der Ansprüche 1 bis 13, **dadurch gekennzeichnet,**
**dass** das aufgeschmolzene Polyolefin dem zweiten Extruder (2) vom ersten Extruder (1) im Wesentlichen drucklos zugeführt wird.

15. Verfahren nach einem der Ansprüche 1 bis 14, **dadurch gekennzeichnet,**
**dass** das aufgeschmolzene Polyolefin vor dem Eintritt in den zweiten Extruder (2) geseiht bzw. gesiebt wird.

16. Verfahren nach einem der Ansprüche 1 bis 15, **dadurch gekennzeichnet,**
**dass** im Austragsbereich des zweiten Extruders (2) und/oder hinter dem zweiten Extruder (2) ein Druck aufgebaut wird.
